# EUROPÄISCHE PATENTSCHRIFT

(11) **EP 2 978 561 B1**
(45) Veröffentlichungstag und Bekanntmachung des Hinweises auf die Patenterteilung: **21.02.2024**
(21) Anmeldenummer: 14717098.9
(22) Anmeldetag: 21.03.2014
(51) Int. Cl.: B23K 26/36, B23K 26/38, B23K 26/40, C03C 23/00

(54) **VERFAHREN ZUM ABTRAGEN VON SPRÖDHARTEM MATERIAL MITTELS LASERSTRAHLUNG**
METHOD FOR REMOVING BRITTLE-HARD MATERIAL BY MEANS OF LASER RADIATION
PROCÉDÉ PERMETTANT D'ENLEVER DE LA MATIÈRE DURE ET CASSANTE AU MOYEN D'UN RAYONNEMENT LASER

(30) Priorität: 26.03.2013 DE 102013005139
(43) Veröffentlichungstag der Anmeldung: 03.02.2016
(73) Patentinhaber: Fraunhofer-Gesellschaft zur Förderung der angewandten Forschung e.V., 80686 München (DE); Rheinisch-Westfälische Technische Hochschule Aachen, 52056 Aachen (DE)
(72) Erfinder: SCHULZ, Wolfgang, 52080 Aachen (DE); EPPELT, Urs, 52062 Aachen (DE)
(74) Vertreter: Grimm, Ekkehard
(86) Internationale Anmeldenummer: PCT/EP2014/000780
(87) Internationale Veröffentlichungsnummer: WO 2014/154342

(56) Entgegenhaltungen:
- JP-A- 2000 301 372
- US-A1- 2012 168 412

## Beschreibung

Die vorliegende Erfindung betrifft ein Verfahren zum Abtragen, das bedeutet beispielsweise Schneiden, Ritzen, Bohren, von spröd hartem Material mittels Laserstrahlung, bei dem sich durch den Abtrag eine Abtragsvertiefung mit einem Flankenwinkel w der Flanken der Abtragsvertiefung in dem Material ausbildet, wobei der Flankenwinkel w als der Winkel zwischen der Oberflächennormalen auf einer Flanke der Abtragsvertiefung und der Oberflächennormalen auf der nicht abgetragenen Oberfläche des Materials definiert ist.

Solche Verfahren finden ihre Anwendung unter anderem in der Display-Technik, in der dünne Glassubstrate, ein sprödharter Werkstoff, bearbeitet werden müssen. Gerade die industrielle Display-Technik erobert ein immer größeres Marktvolumen und tendiert zu immer leichteren Geräten und somit auch dünneren Glasscheiben für zum Beispiel Smart Phones und Tablet Computer.

Dünne Glassubstrate bieten gerade dann Vorteile für Displays, wenn die Haltbarkeit und mechanische Stabilität von dickerem Glas erreicht werden kann. Diese dünnen Glassscheiben werden nahezu in allen Flat Panel Displays (FDP's) angewandt.

Konventionelle Verfahren zum Bearbeiten solcher dünnen Glasscheiben sind das Fräsen mit definierter Schneide oder basieren auf mechanischen Wirkungen einer gezielt in den Werkstoff eingebrachten Rissbildung (Ritzen und Brechen). Eine Vielzahl von bekannten Verfahrensvarianten unter Einsatz von Laserstrahlung basiert ebenfalls darauf, die mechanischen Wirkungen des Prinzips von Ritzen und anschließendem Brechen zu nutzen, indem das Ritzen durch die Einwirkung von Laserstrahlung ersetzt wird und der Werkstoff nach der Einwirkung der Laserstrahlung gebrochen wird. Die konventionelle mechanische Bearbeitung (Schneiden, Bohren) ist für dünne Glasplatten wesentlich schwieriger als für große Werkstoffdicken. Beim mechanischen Ritzen werden nämlich Mikrorisse eingebracht oder sogar kleine Teile, sogenannte Chips, herausgebrochen, so dass ein Schleifen oder Ätzen als nachbearbeitender Prozess notwendig wird.

Die JP 2000 302 488A beschreibt ein Verfahren, um sehr dünne Löcher mit einer komplizierten Querschnittsform mittels Laserstrahlung oder Ultraschallbearbeitung in einem Glasmaterial zu erzeugen. Der Bohrungsdurchmesser kann mit der Bohrtiefe eingestellt werden, diese Konturierung einer Bohrung wird auch als Taper bezeichnet. Das Verfahren nutzt eine Kombination von Laserbohren und Schleifen. Nachdem die Bohrung mit überwiegend nicht zylindrischen Wänden erstellt ist, wird ein Teil der Bohrung ausgewählt, der den gewünschten taper enthält, und der Rest des Materials zusammen mit dem Rest der Bohrung wird durch Schleifen entfernt.

Die US 2012/168412 A1 beschreibt ein Verfahren zum Bilden eines Lochs innerhalb eines Substrats, beispielsweise aus Silizium. Das Substrat wird von der einen Seite aus mit einem Laserstrahl bestrahlt, um dadurch ein Loch in dem Substrat zu bilden, wobei dann anschließend in das Loch ein Ätzmittel eingefüllt wird, um dadurch die Seitenwände des Lochs mit dem Ätzmittel zu ätzen. Ein solcher Ätzprozess kann mehrfach durchgeführt werden. Insbesondere soll mit dem Ätzvorgang der eintrittsseitige Durchmesser des Lochs, der austrittseitige Durchmesser des Lochs und/oder die Oberflächenrauhigkeit der Seitenwände des Lochs beeinflusst werden. Diesem Dokument ist auch der allgemeine Hinweis zu entnehmen, dass bei einem "Laser-Drilling-Prozess", Ort der Fokusebene, Laserpulsenergie, Laserpulsdauer, Laserpulstemperaturprofil, Laserpulswiederholungsrate, Zahl der Laserpulse, Laserspotgröße, Wellenlänge und dergleichen eingestellt werden können.

Der Erfindung liegt die Aufgabe zugrunde, ein Verfahren unter Einsatz von Laserstrahlung zu schaffen, mit dem eine große Abtragsrate und eine große Abtragstiefe bei gleichzeitig schädigungsfreiem Abtragen/Schneiden erreichbar sind, so dass durch die Einwirkung der Laserstrahlung beim Abtragen/Schneiden eine große Materialtiefe bearbeitet wird und nach der Bearbeitung keine zusätzlichen Spannungen oder zusätzlichen Risse in den sprödharten Werkstoff eingebracht werden. Gelöst wird diese Aufgabe durch ein Verfahren mit den Merkmalen des Anspruchs 1. Wesentlich für das erfindungsgemäße Verfahren ist, dass der Strahlradius der Laserstrahlung am Eintritt der Abtragsvertiefung so klein eingestellt wird, dass der Flankenwinkel w nahezu 90 Winkelgrade erreicht und die erreichbare Abtragstiefe mindestens um den Faktor 2 größer wird als für einen größeren Strahlradius, bei dem der Flankenwinkel kleiner als der materialspezifische Grenzwinkel wmax ist.

Hierbei ist der Grenzwinkel als Winkel definiert, der sich nach experimentellem Befund nach vielen Pulsen der Laserstrahlung einstellt, und über den hinaus kein weiterer Abtrag erfolgen kann.

Gemäß der Erfindung kommt dem eingesetzten Strahlradius der Laserstrahlung gro-ße Bedeutung für das Überschreiten des Grenzwinkels wmax in Bezug auf den Flankenwinkel w zu. Im Gegensatz dazu wird im Stand der Technik davon ausgegangen, dass lediglich eine Änderung der absorbierten Intensität für den Flankenwinkel relevant ist. Mit der Wahl des Strahlradius ist bereits der maximal zu erreichende Flan-kenwinkel, also der Grenzwinkel, festgelegt, der dann noch von Materialeigenschaften (z.B. Absorptionsgrad) abhängt und deswegen hier "materialspezifischer Grenzwinkel wmax" genannt wird.

Der Wert für den geeignet kleinen Strahlradius wird bestimmt, indem der Strahlradius schrittweise verkleinert wird, bis ein schwellenartiger Wechsel des Flankenwinkels w von Werten w ≤ wmax kleiner oder gleich dem materialspezifischen Grenzwinkel wmax zu großen Werten des Flankenwinkels w nahe 90 Winkelgrade auftritt.

Es ist anzumerken, dass nach dem Stand der Technik mit Laserstrahlung nur eine kleine Abtragstiefe erreicht wird. Es stellt sich eine Abtragstiefe ein, die nicht mehr von der Anzahl von auftreffenden Pulsen abhängig ist.

Das erfindungsgemäße Verfahren lehrt, dass für einen hinreichend kleinen Strahlradius der Laserstrahlung am Eintritt der Abtragsvertiefung der Flankenwinkel w den Grenzwinkel wmax schwellenartig deutlich überschreitet und die erreichbare Abtragstiefe schwellenartig deutlich zunimmt, und dass der Flankenwinkel nahezu 90 Winkelgrade annimmt.

Somit lehrt das Verfahren auch, dass die schwache Zunahme des Flankenwinkels mit kleinerem Strahlradius schwellenartig in eine deutliche Zunahme wechselt, wenn der Strahlradius der Laserstrahlung hinreichend klein eingestellt wird. Der Fachmann kann demnach den Strahlradius experimentell bestimmen, mit dem das Ergebnis erzielt wird, dass ein so genannter Bohrstop auftritt, also ein Grenzwinkel, bei dem kein weiterer Abtrag erfolgt.

Eine typische Abtragsvertiefung besitzt eine Bodenfläche und seitliche Abtragsflanken. Bei einem Abtrag mit Laserstrahlung stellt sich zwischen der Oberflächennormalen auf der Abtragsvertiefung und der Oberflächennormalen auf der nicht abgetragenen Oberfläche des Materials ein Winkel, bezeichnet als Flankenwinkel w, ein, der typischerweise einen maximalen Wert wmax, der auch als Grenzwinkel wmax bezeichnet wird, erreicht. Selbst durch das Einwirken mehrerer Pulse oder durch mehrere Überfahrten an einer Stelle des Materials kann dieser Flankenwinkel w nicht größer werden als der Grenzwinkel wmax. Der Grenzwinkel wmax kann experimentell bestimmt werden und nimmt einen materialspezifischen Wert von typischerweise 70 Grad an. Eine größere Tiefe der Abtragsvertiefung kann nach dem derzeitigen Stand der Technik nur erreicht werden, indem die Breite der Abtragsvertiefung vergrößert wird. Hierfür können zum Beispiel mehrere Spuren von aufeinanderfolgenden Überfahrten nebeneinander angeordnet werden. Bei den Überfahrten werden die Spuren durch Versatz der Laserstrahlachse verschoben. Auch kann der Durchmesser des Laserstrahls vergrößert werden.

Wie vorstehend erwähnt ist, treten bei der mechanischen Bearbeitung von dünnen Glasplatten Risse auf. Solche Risse sind aber auch bei der Bearbeitung der Glasplatten mit Laserstrahlung zu beobachten. Die Erfinder haben herausgefunden, dass sich diese Risse in mindestens drei unterschiedlichen Erscheinungsformen äußern:
- Risse einer ersten Art: Eine Schädigung/Rissbildung/Chipping tritt auf der Rückseite des Werkstoffs auf. Risse erster Art treten auch schon dann auf, wenn auf der Vorderseite - von wo aus die Laserstrahlung einfällt - noch keine Schädigung und auch noch kein Abtrag erfolgt ist.
- Risse zweiter Art: Risse oder Schädigungen - auch Spikes genannt - gehen von der Eintrittskante aus, die den Übergang von dem unveränderten Teil der Oberfläche des Werkstücks in die seitlichen Abtragsflanken der sich ausbildenden Abtragsvertiefung darstellt.

Die Risse oder Schädigungen zweiter Art verlaufen über eine - im Vergleich zu Rissen dritter Art - große Tiefe in das Volumen des Werkstoffs. Diese von der Eintrittskante ausgehenden Material-ModifikationenZ-Schädigungen können auch im Volumen sichtbar werden bzw. entstehen (sie werden dann auch "Filamente" genannt; Kerr-Effekt und Selbstfokussierung sind die physikalischen Ursachen) oder sogar die Rückseite bzw. die der Laserstrahlung abgewandte Oberfläche des Werkstoffs erreichen.
- Risse dritter Art: Die Entstehung von feinen, nicht so tief eindringenden Rissen tritt zusätzlich zu den Rissen zweiter Art oder Schädigungen zweiter Art - entlang der abgetragenen Oberfläche (Schnittkante) auf - sie sind nicht auf den Bereich nahe der Eintrittskante beschränkt und treten dort auf, wo die Laserstrahlung in der Abtragsvertiefung auf die abgetragene Oberfläche (Abtragsflanken), das bedeutet die Abtragsflanken, einfällt. Sie breiten sich von der abgetragenen Oberfläche in den Werkstoff aus. Die Risse dritter Art dringen im Vergleich zu den Rissen erster Art weniger tief in den Werkstoff ein. Die raue Oberfläche der Abtragsvertiefung weist im Vergleich zur Eintrittskante eine Rauhigkeit mit kleineren Krümmungsradien auf. Die fokussierende Wirkung der rauen Oberfläche der Abtragsvertiefung ist wesentlich stärker als die fokussierende Wirkung der Eintrittskante.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: schematisch das Ergebnis einer Simulation der erfindungsgemäßen Verfahrensführung zur Erzeugung einer Abtragsvertiefung,
- Figur 2: schematisch einen Querschliff einer mit Laserstrahlung erzeugten Abtragsvertiefung in Glas,
- Figur 3: eine Grafik der projizierten Intensität, der absorbierten Intensität und der Schwellenintensität für einen Abtrag, wie er in Figur 2 dargestellt ist,
- Figur 4: schematisch die Abtragsvertiefung der Figur 2 mit Kennzeichnung der verschiedenen Rissbildungen/Schädigungen zweiter Art und dritter Art,
- Figur 5: eine simulierte Abtragsvertiefung, die die Ausbreitung der sich ausbildenden Risse zweiter Art und dritter Art darstellt,
- Figur 6: eine schematische Skizze, um die Entstehung einer Abtragsvertiefung mit rauen Abtragsflanken zu erläutern, und
- Figur 7: das Beugungsmuster, das durch Beugung der einfallenden Laserstrahlung an den Abtragsflanken entsteht.

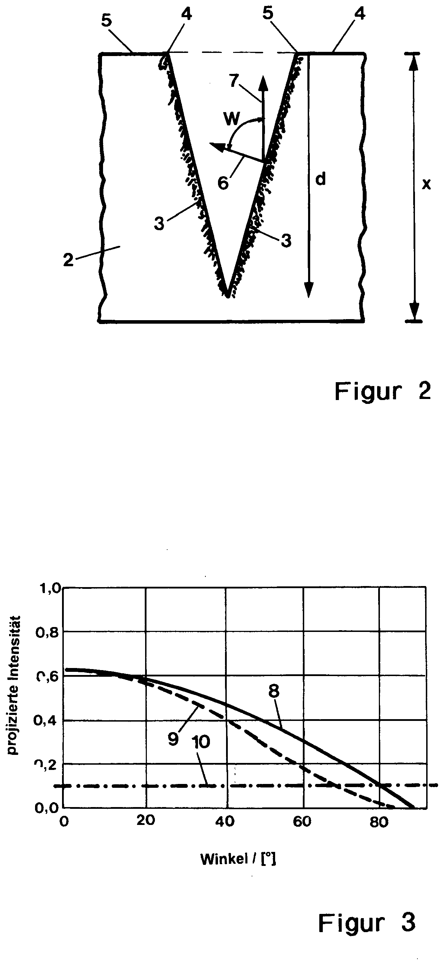

In der Darstellung der Figur 2 ist schematisch eine V-förmige Abtragsvertiefung 1 dargestellt, die in einem dünnen Glasmaterial 2 mit einer Dicke x gebildet ist. Diese Abtragsvertiefung 1 besitzt Abtragsflanken 3, die von einer Eintrittskante 4 an der Oberfläche 5 des Materials ausgehen.

Die beiden Vektorpfeile geben zum einen die Oberflächennormale auf der Abtragsvertiefung, mit dem Bezugszeichen 6 bezeichnet, und zum anderen die Richtung der Oberflächennormalen 7 der nicht abgetragenen Oberfläche des Glasmaterials 2 an. Der Winkel zwischen den beiden Oberflächennormalen 6 und 7 stellt den Flankenwinkel w der Flanke der Abtragsvertiefung 1 in dem Material 2 dar.

Wie die Figur 3 zeigt, kann der vorstehend erwähnte Grenzwinkel wmax durch den Schnittpunkt der Kurve 1 für die im Material absorbierte Intensität und der Kurve 2 der Schwellenintensität für den Abtrag bestimmt werden, wie dies in der Grafik dargestellt ist. Ist die absorbierte Intensität kleiner als die Schwellenintensität für den Abtrag, dann kann kein weiterer Abtrag mehr erfolgen: ein so genannter Bohrstopp tritt ein, wenn sich die Flanken der Abtragsvertiefung in der Tiefe d treffen. Der Bohrstopp setzt bei einer kleinen Tiefe ein, wenn der maximale Wert für den Flankenwinkel w der Abtragsvertiefung klein ist und sich folglich die Flanken der Abtragsvertiefung bereits in einer kleineren Tiefe d treffen, wie dies die Figur 2 zeigt.

In der Grafik der Figur 3 sind die projizierte Intensität durch eine Kurve 8 (durchgezogene Linie), die absorbierte Intensität durch eine Kurve 9 (unterbrochene Linie) dargestellt und die Schwellenintensität ist durch die Linie 10 (strichpunktierte Linie) für den Abtrag, wie er in Figur 2 dargestellt ist, gezeigt.

Typischerweise kann ein Grenzwinkel wmax für die Flankenwinkel w bzw. die Steigung der Schnittkante/Abtragskante nicht überschritten werden. Der Grenzwinkel wmax hat einen materialspezifischen Wert von typischerweise 70 Winkelgraden und kann experimentell bestimmt werden.

Ein Durchmesser der Abtragsvertiefung, der klein ist, bewirkt am Rand der Abtragsvertiefung eine verkleinerte Absorption und eine Führung der Laserstrahlung an der fortschreitenden Front der Abtragsvertiefung durch Mehrfachreflexion bzw. Wellenleitung. Erfindungsgemäß tritt dieser vorteilhafte Effekt auch beim Abtragen/Schneiden auf, wenn lediglich der Durchmesser der Abtragsvertiefung verkleinert wird und keine Totalreflexion vorliegt. Erfindungsgemäß tritt dieser Effekt auch an einer Schneidfront auf, wenn die Abtrags- bzw. Schneidfront eine teilweise geöffnete wellenleitende geometrische Form aufweist und nicht in einer etwa zylindrischen Form die Strahlung einschließt, wie dies von der Faserführung bekannt ist.

Für die verschiedenen Begriffe, die hier verwendet werden, sind die folgenden Definitionen anwendbar:
Schwellenintensität I_{ablation} der Laserstrahlung ist die Intensität, bei der ein Schwellenwert ρ_{ablation} der Elektronendichte erreicht wird.

Flankenwinkel w gibt den Winkel zwischen der Oberflächennormalen auf der Abtragsvertiefung und der Oberflächennormalen auf der nicht abgetragenen Oberfläche des Materials an.

Grenzwinkel wmax ist der Wert des Grenzwinkels wmax, der nicht überschritten werden kann. Der Flankenwinkel w ist nach dem Stand der Technik nämlich begrenzt und kann den Wert des Grenzwinkels wmax nicht überschreiten. Der Grenzwinkel hat einen materialspezifischen Wert von typischerweise 70 Winkelgraden und kann experimentell bestimmt werden.

Schwellenwert ρ_{abiation} ist der Schwellenwert der Elektronendichte, bei dem eine Ablation/ein Abtrag einsetzt.

Schwellenwert ρ_{damage} ist der Schwellenwert der Elektronendichte, bei dem Schädigungen/Risse einsetzen.

Pulsparameter ist ein Satz von Parametern, mit denen die räumlichen, zeitlichen und spektralen Eigenschaften der einfallenden Laserstrahlung charakterisiert werden. Der Pulsparameter enthält mindestens die Werte für
- Pulsdauer,
- Maximalwert der Intensität im Puls,
- zeitliche Pulsform; hierbei handelt es sich um die zeitliche Verteilung der Intensität von Laserstrahlung in einem Einzel puls oder in einer Folge von Pulsen (Mehrfachpuls, Pulsburst)
- räumliche Verteilung der Intensität und
- spektrale Verteilung der Intensität (Wellenlängenmischung).

Eintrittskante ist ein räumlich ausgedehnter Bereich der Oberfläche des Werkstücks, wo ein unveränderter Teil der Oberfläche des Werkstücks in den Teil der Oberfläche übergeht, in dem der Abtrag von Werkstoff stattgefunden hat und eine Abtragsvertiefung entstanden ist.

Rand der Abtragsvertiefung ist eine durch den Abtrag von Werkstoff erzeugte Oberfläche.

Rückseite des Werkstoffs ist die der Laserstrahlung abgewandte Oberfläche des Werkstoffs.

Bei den drei vorstehend erläuterten unterschiedlichen Erscheinungsformen von Schädigungen/Rissen handelt es sich bei
Rissen erster Art um Rückseitenschädigungen,
Rissen zweiter Art um Eintrittskantenschädigungen,
Rissen dritter Art um Schädigungen, die von der Oberfläche der Abtragsvertiefung, das bedeutet von den Flanken der Abtragsvertiefung, ausgehen.

Es werden zwei Schwellenwerte ρ_{damage}, ρ_{ablation} für die Elektronendichte p im Werkstoff, die jeweils eine Schädigung ρ_{damage} oder einen Abtrag ρ_{ablation} des Werkstoffs bewirken, definiert. Für jeden Werkstoff können diesen unterschiedlichen Schwellenwerten ρ_{damage}, ρ_{ablation} für die Elektronendichte p, wobei ρ_{damage} < ρ_{ablation} ist, zwei Sätze von Werten für die Parameter der Laserstrahlung zugeordnet werden.

Eine das Licht brechende, zum Beispiel fokussierende, Eigenschaft der Eintrittskante ist für die Erfindung von besonderer Bedeutung. Die Eintrittskante kann nämlich eine geometrische Form und eine Ausdehnung aufweisen, die zwei unerwünschte Effekte bewirken kann, die allerdings durch das erfindungsgemäße Verfahren vermieden oder wesentlich verringert werden können. Zum einen kann durch die geometrische Form eine unerwünschte Fokussierung der einfallenden Laserstrahlung in den Werkstoff auftreten und zum anderen kann durch die Ausdehnung die Leistung der einfallenden Laserstrahlung, die von der Eintrittskante erfasst und dann in den Werkstoff fokussiert wird, in unerwünschter Weise einen Wert annehmen, so dass die Intensität in dem Fokus der Eintrittskante eine Elektronendichte p erzeugt, die den Schwellenwert ρ_{damage} der Elektronendichte für eine Schädigung des Werkstoffs überschreitet und den Schwellenwert ρ_{ablation} der Elektronendichte für einen Abtrag nicht erreicht.

Bei der Schädigung des Werkstoffs treten die drei unterschiedlichen Arten von Rissen auf, die bereits vorstehend erläutert wurden.

Risse erster Art sind solche, die schon dann auftreten, wenn von der Vorderseite - wo die Laserstrahlung einfällt - noch keine Schädigung und auch kein Abtrag erfolgt ist.

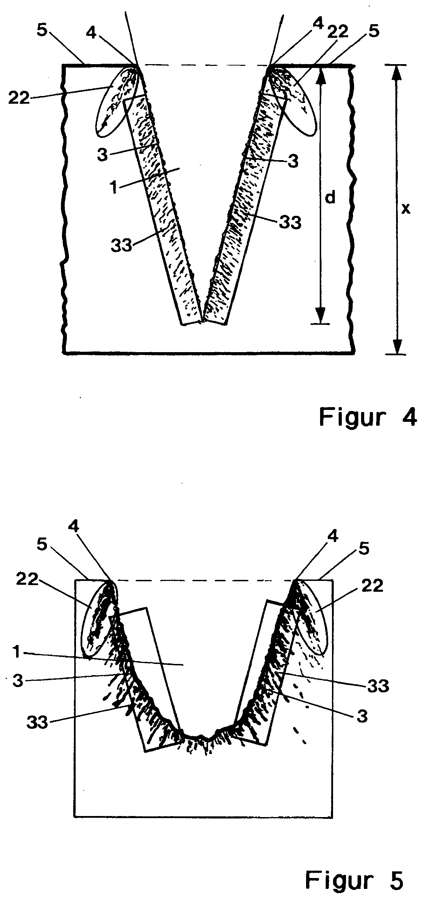

Risse zweiter Art und dritter Art werden anhand der Figuren 4 und 5 verdeutlicht.

Risse oder Schädigungen zweiter Art - auch Spikes genannt - gehen von der Eintrittskante aus. Die Risse oder Schädigungen zweiter Art verlaufen über eine - im Vergleich zu den Rissen dritter Art - große Tiefe in das Volumen des Werkstoffs. Diese von der Eintrittskante ausgehenden Material-Modifikationen/-Schädigungen können auch im Volumen sichtbar werden bzw. entstehen (sie werde dann auch "Filamente" genannt, Kerr-Effekt und Selbstfokussierung sind die physikalische Ursache) oder sogar die Rückseite bzw. die der Laserstrahlung abgewandte Oberfläche des Werkstoffs erreichen.

Risse dritter Art sind nicht so tief eindringende Risse und treten zusätzlich zu den Rissen zweiter Art oder Schädigungen zweiter Art - entlang der abgetragenen Oberfläche (Schnittkante) - auf; sie sind nicht auf den Bereich nahe der Eintrittskante beschränkt und treten dort auf, wo die Laserstrahlung in der Abtragsvertiefung auf die abgetragene Oberfläche einfällt. Sie breiten sich von der abgetragenen Oberfläche in den Werkstoff aus. Die Risse dritter Art dringen im Vergleich zu den Rissen erster Art weniger tief in den Werkstoff ein. Die raue Abtragsvertiefung weist im Vergleich zur Eintrittskante eine Rauhigkeit mit kleineren Krümmungsradien auf. Die fokussierende Wirkung der rauen Abtragsvertiefung ist wesentlich stärker als die fokussierende Wirkung der Eintrittskante.

In den Figuren 4 und 5 erscheinen die Risse/Schädigungen im Glas als schattierte Gebiete; die Risse zweiter Art sind mit dem Bezugszeichen 22 und die Risse dritter Art mit dem Bezugszeichen 33 gekennzeichnet.

Erreichen die von der abgetragenen Oberfläche ausgehenden Risse 22 die Unterseite bzw. die der Laserstrahlung abgewandte Oberfläche des Werkstoffs, dann können sie oft von den Rissen erster Art, das bedeutet Schädigungen der Unterseite des Werkstücks, ohne dass die Oberseite des Werkstücks bereits abgetragen ist, nicht mehr unterschieden werden. Risse oder Schädigungen der dritten Art beginnen an der rauen Abtragsvertiefung, d.h. an der abgetragenen Oberfläche und dort, wo die abgetragene Oberfläche eine Abweichung von einer Ebenheit aufweist.

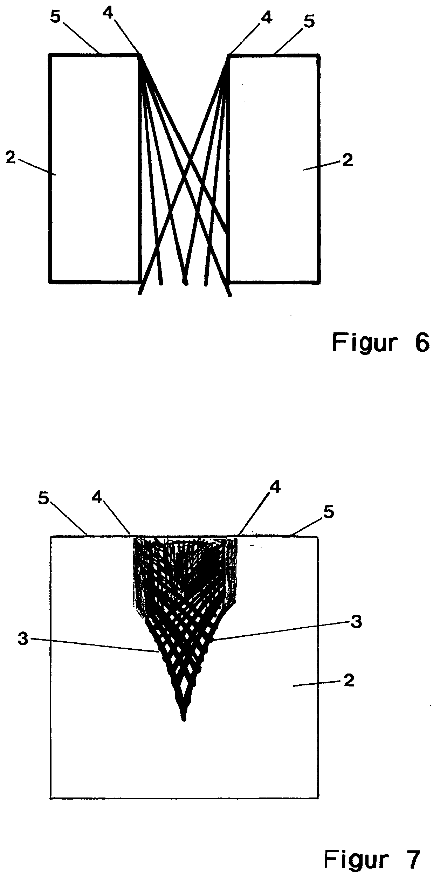

Diese Abweichung der Abtragsvertiefung von der Ebenheit entsteht dadurch, dass die einfallende Laserstrahlung an dem Eintritt der Abtragsvertiefung und in deren Verlauf in die Tiefe des Werkstücks (Abtragsfront, Schnittkante) gebeugt wird und eine Beugungsstruktur aufweist, wie sie in den Figuren 6 und 7 dargestellt ist.

Diese Beugungsstruktur ist eine räumliche Modulation der Intensität und erzeugt die Abweichung von einer ebenen Abtragsfront. Die entstehende Beugungsstruktur für die Intensität der Strahlung in der Abtragsvertiefung führt zu Überhöhungen der Intensität an der Abtragsfront und damit zu einer Abweichung der Abtragsfront von einer glatten oder ebenen Abtragsfront.

Mit den erfindungsgemäßen Maßnahmen, dass der Strahlradius der Laserstrahlung am Eintritt der Abtragsvertiefung schrittweise verkleinert wird, bis ein Wechsel des Flankenwinkels w von Werten w ≤ wmax kleiner oder gleich dem materialspezifischen Grenzwinkel wmax zu großen Werten des Flankenwinkels w nahe 90 Winkelgrade auftritt und die erreichbare Abtragstiefe mindestens um den Faktor 2 größer wird, wird eine Abtragsvertiefung mit großem Flankenwinkel w erzeugt, wobei der Flankenwinkel w den Grenzwinkel wmax überschreitet und wobei der Flankenwinkel w der Abtragsvertiefung mit einer zunehmenden Abtragstiefe z um einen Mittelwert <w>z bzgl. der Abtragstiefe z - um wenige Winkelgrade - schwankt.

Durch Anwendung der erfindungsgemäßen Verfahrensführung kann der Mittelwert <w>z des Flankenwinkels den Wert <w>z=90 Grad annehmen.

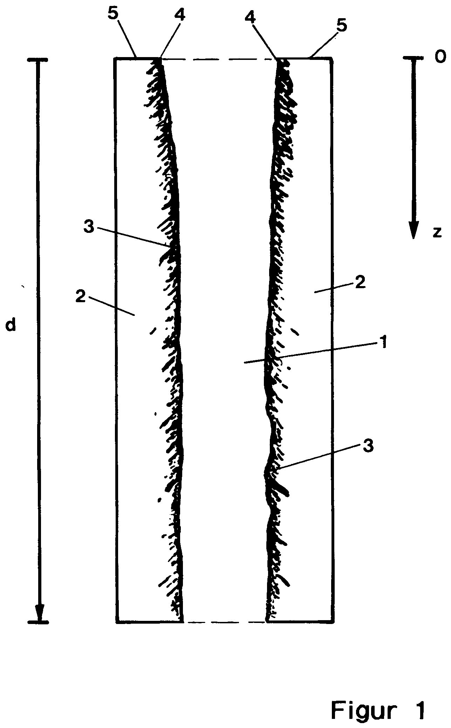

Sowohl die Risse zweiter Art in Form von tief in das Material eindringenden Filamenten, die an der Eintrittskante der Abtragvertiefung entstehen, werden vermieden bzw. deutlich unterdrückt als auch die Risse dritter Art in Form einer Modifikation/Schädigung/Rissbildung ausgehend von der rauen Oberfläche der Abtragsvertiefung im Werkstoff werden vermieden bzw. deutlich unterdrückt, wie ebenfalls die Figur 1 erkennen lässt.

Die Figur 1 zeigt die Simulation einer erfindungsgemäßen Verfahrensführung.

In Figur 7 fällt die Laserstrahlung von rechts auf das Material ein und erzeugt eine Abtragsvertiefung 1. In der Abbildung ist die gesamte Materialdicke d abgetragen. Die Abtragstiefe z nimmt von rechts z=0 nach links z=d zu. Der Mittelwert <w>z des Flankenwinkels w nähert sich mit zunehmender Abtragstiefe z einem Wert von <w>z=90 Grad.

## Patentansprüche

1. Verfahren zum Abtragen von spröd hartem Material (2) mittels Laserstrahlung, bei dem sich durch den Abtrag eine Abtragsvertiefung (1) mit einem Flankenwinkel w der Flanken (3) der Abtragsvertiefung (1) in dem Material (2) ausbildet und sich Risse erster, zweiter und dritter Art im Werkstoff im Bereich der Abtragsvertiefung (1) bilden, wobei der Flankenwinkel w als der Winkel zwischen der Oberflächennormalen (6) auf einer Flanke (3) der Abtragsvertiefung (1) und der Oberflächennormalen (7) auf der nicht abgetragenen Oberfläche (5) des Materials (2) definiert ist, wobei während des Abtragens der Flankenwinkel w einen materialspezifischen Grenzwinkel wmax nicht überschreitet, und
wobei Risse erster Art als solche definiert sind, die auf der Rückseite des Materials schon dann auftreten, wenn auf der Vorderseite, von wo aus die Laserstrahlung einfällt, noch keine Schädigung und auch noch kein Abtrag erfolgt ist, wobei Risse (22) zweiter Art ausgehend von einer Eintrittskante (4), definiert als der Übergang von der nicht abgetragenen Oberfläche (5) des Materials (2) in die seitliche Abtragsflanke (3) der sich ausbildenden Abtragsvertiefung (1), und Risse (33) dritter Art ausgehend von der Flanke (3) der Abtragsvertiefung (1) das Material (2) schädigen,
**dadurch gekennzeichnet,**
**dass** der Strahlradius der Laserstrahlung am Eintritt der Abtragsvertiefung (1) so klein eingestellt wird, dass der Flankenwinkel w nahezu 90 Winkelgrade erreicht und die erreichbare Abtragstiefe (z) mindestens um den Faktor 2 größer wird als für einen größeren Strahlradius, bei dem der Flankenwinkel kleiner als der materialspezifische Grenzwinkel wmax, definiert als der Winkel, der sich nach experimentellem Befund nach vielen Pulsen der Laserstrahlung für einen bestimmten Strahlradius sowie ein bestimtes Material einstellt und über den hinaus kein weiterer Abtrag erfolgen kann, ist, so dass Risse (22) zweiter Art und Risse (33) dritter Art vermieden bzw. deutlich unterdrückt werden, wobei der Wert für den Strahlradius bestimmt wird, indem der Strahlradius schrittweise verkleinert wird, bis ein schwellenartiger Wechsel des Flankenwinkels w von Werten w ≤ wmax kleiner oder gleich dem materialspezifischen Grenzwinkel wmax zu großen Werten des Flankenwinkels w von nahezu 90 Winkelgraden auftritt.

## Claims

1. Method for ablating brittle-hard material (2) by means of laser radiation, in which an ablation depression (1) with a flank angle w of the flanks (3) of the ablation depression (1) is formed in the material (2) by the ablation and cracks of a first, second and third type are formed in the material in the region of the ablation depression (1), wherein the flank angle w is defined as the angle between the surface normal (6) on one flank (3) of the ablation depression (1) and the surface normal (7) on the non-ablated surface (5) of the material (2), wherein during ablation the flank angle w does not exceed a material-specific limit angle wmax, and wherein cracks of the first type are defined as those which already occur on the rear side of the material when no damage and also no ablation has yet taken place on the front side from where the laser radiation is incident, wherein cracks (22) of the second type, starting from a leading edge (4), defined as the transition from the non-ablated surface (5) of the material (2) into the lateral ablation flank (3) of the ablation depression (1) being formed, and cracks (33) of a third type starting from the flank (3) of the ablation depression (1) damage the material (2),
**characterised in**
**that** the beam radius of the laser radiation at the entrance to the ablation recess (1) is set so small that the flank angle w reaches almost 90 degrees of angle and the achievable ablation depth (z) is greater by at least a factor of 2 than for a larger beam radius at which the flank angle is smaller than the material-specific limit angle wmax, defined as the angle which, according to experimental findings, is established after many pulses of the laser radiation for a specific beam radius and a specific material and beyond which no further ablation can take place, so that cracks (22) of the second type and cracks (33) of the third type are avoided or significantly suppressed, the value for the beam radius is determined by gradually reducing the beam radius until a threshold-like change in the flank angle w from values w ≤ wmax less than or equal to the material-specific limit angle wmax to large values of the flank angle w of almost 90 degrees of angle occurs.

## Revendications

1. Procédé pour enlever une matière (2) dure et cassante au moyen d'un rayonnement laser, selon lequel un évidement d'enlèvement (1) avec un angle de flanc w des flancs (3) de l'évidement d'enlèvement (1) se réalise dans la matière (2) au moyen de l'enlèvement et des fissures de premier, deuxième et troisième type se forment dans le matériau dans la zone de l'évidement d'enlèvement (1), dans lequel l'angle de flanc w est défini en tant qu'angle entre les normales à la surface (6) sur un flanc (3) de l'évidement d'enlèvement (1) et les normales à la surface (7) sur la surface (5) non enlevée de la matière (2), dans lequel pendant l'enlèvement l'angle de flanc w ne dépasse pas un angle limite spécifique à la matière wmax, et dans lequel les fissures de premier type sont définies comme celles qui apparaissent sur la face arrière de la matière lorsque ni dommage ni enlèvement n'est effectué sur la face avant d'où le rayonnement laser est incident, dans lequel les fissures (22) de deuxième type partant d'un bord d'entrée (4), défini en tant que transition à partir de la surface (5) non enlevée de la matière (2) dans le flanc (3) d'enlèvement latéral de l'évidement d'enlèvement (1) se réalisant, et les fissures (33) de troisième type partant du flanc (3) de l'évidement d'enlèvement (1), endommagent la matière (2), **caractérisé en ce que** le rayon de faisceau du rayonnement laser à l'entrée de l'évidement d'enlèvement (1) est réglé pour être si petit que l'angle de flanc w atteint presque 90 degrés d'angle et la profondeur d'enlèvement (z) pouvant être atteinte est plus grande d'au moins le facteur 2 que pour un rayon de faisceau plus grand, pour lequel l'angle de flanc est inférieur à l'angle limite spécifique à la matière wmax, défini en tant qu'angle qui s'établit après une conclusion expérimentale après de nombreuses impulsions du rayonnement laser pour un rayon de faisceau déterminé ainsi qu'une matière déterminée et au-delà duquel aucun autre enlèvement ne peut s'effectuer, de sorte que les fissures (22) de deuxième type et les fissures (33) de troisième type sont évitées ou clairement supprimées, dans lequel la valeur pour le rayon de faisceau est déterminée du fait que le rayon de faisceau est diminué progressivement jusqu'à ce qu'un passage de type seuil de l'angle de flanc w de valeurs w ≤ wmax inférieures ou égales à l'angle limite spécifique à la matière wmax à de grandes valeurs de l'angle de flanc w de presque 90 degrés d'angle apparaisse.
